# EUROPEAN PATENT SPECIFICATION

(11) **EP 2 458 504 B1**
(45) Date of publication and mention of the grant of the patent: **01.05.2019**
(21) Application number: 10801892.0
(22) Date of filing: 21.05.2010
(51) Int. Cl.: G06F 11/22, G06F 11/07, G06F 11/10

(54) **METHOD AND DEVICE FOR PROCESSING DATA CACHING**
VERFAHREN UND VORRICHTUNG ZUR VERARBEITUNG VON DATENCACHE-OPERATIONEN
PROCÉDÉ ET DISPOSITIF POUR LE TRAITEMENT DE MISE EN ANTÉMÉMOIRE DE DONNÉES

(30) Priority: 24.07.2009 CN 200910161519
(43) Date of publication of application: 30.05.2012
(73) Proprietor: ZTE Corporation, Shenzhen, Guangdong 518057 (CN)
(72) Inventor: CHEN, Hongqi, Shenzhen Guangdong 518057 (CN); ZHOU, Chang, Shenzhen Guangdong 518057 (CN)
(74) Representative: Manitz Finsterwald Patent- und Rechtsanwaltspartnerschaft mbB
(86) International application number: PCT/CN2010/073072
(87) International publication number: WO 2011/009332

(56) References cited:
- EP-A2- 0 794 494
- CN-A- 1 315 732
- CN-A- 101 359 512
- CN-A- 101 615 145
- JP-A- 10 269 148
- US-A1- 2004 015 762
- US-B1- 6 658 592

## Description

### Technical Field

The present invention relates to the technical field of network communication, and in particular, to a method and device for processing data caching. Related technology is known from US 2004/015762 A1.

### Background Art

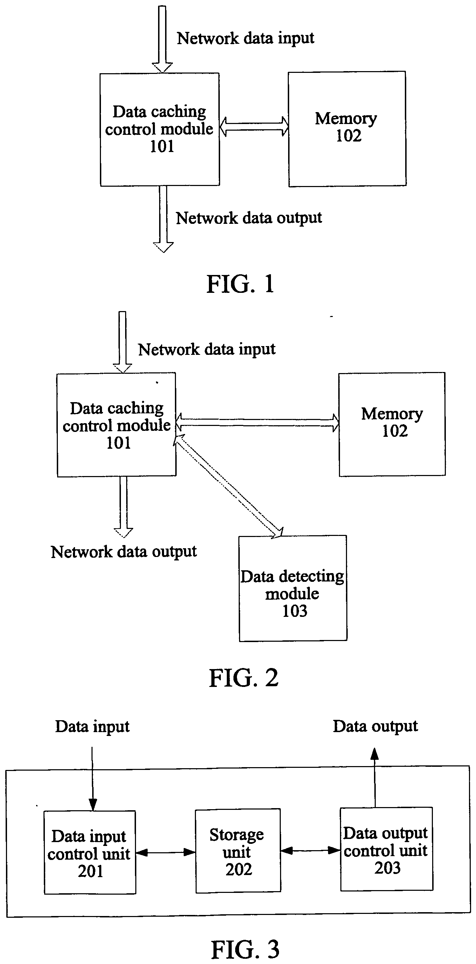

When data are cached in a route switching device, as shown in FIG. 1, a data caching control module 101 usually splits a data packet into a plurality of data slices according to a certain rule and stores them in a memory 102, and when the data packet is output, it then combines the plurality of split data slices into the original data packet. The length of the split data slice of the data packet should be associated with factors such as the minimum length of the data packet, inner packet processing speed, and data bit width of the memory. Queue storage usually adopts a dynamic storage mode with different queue storage regions, and under the condition of considering the bandwidth utilization ratio of a dynamic memory, the queue data needing to be cached may be put in any idle region at any moment.

With the development of network technology, the capacity of dynamic data caching in the route switching device becomes larger and larger, and the reliability of data caching becomes a problem that has to be considered. The typical processing mode is to improve the fault-tolerance ability of data caching through an Error correction code (ECC), i.e., when data are received, an ECC is generated for each data slice, and when the data are output, each data slice is corrected according to the ECC of the data slice and then output in order to improve the reliability of data caching. However, the ECC achieves the fault-tolerance ability by adding redundant data, and the lengths of redundant data for different ECC algorithms are different, so are the lengths of data slices in different application scenes. The segmentation of data slices must be segmenting the addresses of the data slices integrally, and the addition of the different lengths of the redundant data may cause complicity of data address generation and addressing. Therefore, the mode of adding redundant data is generally not taken into consideration when caching data in a route switching device.

### Summary of the Invention

The technical problem to be solved in the present invention is to provide a method and device for processing data caching to detect whether an unsafe memory space exits in the memory, thereby improving the reliability of data caching.

In order to solve the above technical problem, the present invention provides a device for processing data caching, comprising a data caching control module connected with a memory, wherein the data caching control module is configured to cache received data in the memory, and read out the data cached in the memory after completing caching, and the device further comprises a data detecting module connected with the data caching control module;
the data caching control module is further configured to provide cached data to be written and a memory space address for storing the cached data in the memory for the data detecting module before writing the cached data into the memory; after reading out the cached data from the memory space address of the memory, provide the cached data that have been read out for the data detecting module; the data caching control module is further configured to acquire from the data detecting module normal or abnormal state of a memory space in the memory, and store subsequent cached data only into normal memory spaces;
the data detecting module is configured to judge whether the cached data that have been read out are the same as the cached data to be written, and if so, decide that the memory space in the memory for storing the cached data is normal; if not, decide that the memory space in the memory for storing the cached data is abnormal.

Preferably, the data detecting module comprises a data input control unit, a storage unit and a data output control unit that are connected in sequence;
the data input control unit is configured to, after obtaining from the data caching control module the cached data to be written, generate first check data according to the cached data to be written and store the first check data in the storage unit; the data input control unit is further configured to, after obtaining the cached data that have been read out from the data caching control module, generate second check data according to the cached data that have been read out, and when the first check data are judged to be the same as the second check data, decide that the memory space in the memory for storing the cached data is normal; when the first check data are judged to be different from the second check data, decide that the memory space in the memory for storing the cached data is abnormal, and store the normal or abnormal state of the memory space in the memory for storing the cached data in the storage unit;
the data output control unit is configured to obtain the normal or abnormal state of the memory space in the memory for storing the cached data from the storage unit, and inform the data caching control module of the state of the memory space.

Preferably, the data detecting module comprises a data input control unit, a storage unit and a data output control unit that are connected in sequence;
the data input control unit is configured to, after obtaining the cached data to be written from the data caching control module, store the cached data to be written into the storage unit; the data input control unit is further configured to, after obtaining the cached data that have been read out from the data caching control module, compare the cached data that have been read out with the stored cached data to be written, when the cached data that have been read out are the same as the stored cached data to be written, decide that the memory space in the memory for storing the cached data is normal; when the cached data that have been read out are different from the stored cached data to be written, decide that the memory space in the memory for storing the cached data is abnormal, and store the normal or abnormal state of the memory space in the memory for storing the cached data in the storage unit;
the data output control unit is configured to obtain the normal or abnormal state of the memory space in the memory for storing the cached data from the storage unit, and inform the data caching control module of the state of the memory space.

Preferably, the data detecting module comprises a data input control unit, a storage unit and a data output control unit that are connected in sequence;
the data input control unit is configured to, after obtaining from the data caching control module the cached data to be written, generate first check data according to the cached data to be written and store the first check data in the storage unit;
the data output control unit is configured to, after obtaining the cached data that have been read out from the data caching control module, generate second check data according to the cached data that have been read out, obtain the first check data from the storage unit, and when the first check data are judged to be the same as the second check data, decide that the memory space in the memory for storing the cached data is normal; when the first check data are judged to be different from the second check data, decide that the memory space in the memory for storing the cached data is abnormal, and store the normal or abnormal state of the memory space in the memory for storing the cached data in the storage unit;
the data caching control module is further configured to acquire the normal or abnormal state of the memory is in normal or abnormal state by reading the storage unit.

Preferably, the data detecting module comprises a data input control unit, a storage unit and a data output control unit that are connected in sequence;
the data input control unit is configured to, after obtaining from the data caching control module the cached data to be written, generate first check data according to the cached data to be written and send the first check data to the data caching control module;
the data output control unit is configured to, obtain the cached data that have been read out and the corresponding first check data from the data caching control module, generate second check data according to the cached data that have been read out, and when the first check data are judged to be the same as the second check data, decide that the memory space in the memory for storing the cached data is normal; when the first check data are judged to be different from the second check data, decide that the memory space in the memory for storing the cached data is abnormal, and store the normal or abnormal state of the memory space in the memory for storing the cached data in the storage unit;
the data caching control module is further configured to receive the first check data sent by the data input control unit, and store both the cached data to be written and the first check data in the memory; and acquire the normal or abnormal state of the memory space in the memory by reading the storage unit.

Preferably, the storage unit is configured to maintain a memory mapping table, wherein composition elements of the memory mapping table correspond to memory space segments of the memory one by one, and each of the composition elements represents a state of a corresponding memory space segment;
the data input control unit is further configured to, after deciding the state of a memory space segment, write the state of the memory space segment into the memory mapping table;
the data output control unit is further configured to provide the memory mapping table to the data caching control module.

Preferably, the space occupied by the composition element of the memory mapping table is one bit, and the capacity of the memory space segment corresponding to each composition element of the memory mapping table is the same.

Preferably, the device is applied to a route switching device.

In order to solve the above technical problem, the present invention provides a method for processing data caching, comprising the following steps of:
storing cached data into a memory;
after reading out the cached data from a memory space address for storing the cached data in the memory, judging whether the cached data that have been read out are the same as the cached data to be written before the storing, if so, then deciding that the memory space in the memory for storing the cached data is normal; if not, then deciding that the memory space in the memory for storing the cached data is abnormal; and
when storing cached data during a subsequent data caching process, storing the cached data only into memory spaces in normal state in the memory.

Preferably, in the step of judging whether the cached data that have been read out are the same as the cached data to be written before the storing, whether the cached data that have been read out are the same as the cached data to be written before the storing is judged by way of judging check data.

Preferably, before the step of storing cached data into a memory, the method further comprises: generating first check data according to the cached data to be written before the storing and storing the first check data;
after reading out the cached data from the memory space address for storing the cached data in the memory, the method further comprises: generating second check data according to the cached data that have been read out;
in the step of judging whether the cached data that have been read out are the same as the cached data to be written before the storing, whether the cached data that have been read out are the same as the cached data to be written before the storing is judged by judging whether the first check data are the same as the second check data.

Preferably, before the step of storing cached data into a memory, the method further comprises: generating first check data according to the cached data to be written before the storing;
the step of storing cached data into a memory comprises: storing both the cached data to be written and the first check data into the memory;
in the step of reading out the cached data, the cached data and the corresponding first check data are read out;
after the step of reading out the cached data, the method further comprises: generating second check data according to the cached data that have been read out;
in the step of judging whether the cached data that have been read out are the same as the cached data to be written before the storing, whether the cached data that have been read out are the same as the cached data to be written before the storing is judged by judging whether the first check data are the same as the second check data.

Preferably, the method further comprises:
storing a normal or abnormal state of the memory space for storing the cached data;
wherein, the state of the memory space in the memory is recorded by maintaining a memory mapping table, composition elements of the memory mapping table correspond to memory space segments of the memory one by one, and each of the composition elements represents a state of a corresponding memory space segment; the judged state of the memory space segment is written into the memory mapping table.

Preferably, the space occupied by the composition element of the memory mapping table is one bit, and the capacity of the memory space segment corresponding to each composition element of the memory mapping table is the same.

Compared with the existing ECC technology for improving fault-tolerance ability, the present invention can be implemented with simple code migration and may be directly applied to an existing device for data caching to detect whether an unsafe memory space exists in the memory, thus improving the reliability of data caching.

### Brief Description of Drawings

FIG. 1 is a structural diagram of the modules of the route switching device for data caching implemented in the related art;
FIG. 2 is a structural diagram of the modules of the device for processing data caching according to an example of the present invention;
FIG. 3 is a structural diagram of the specific composition of the data detecting module according to an example of the present invention.

### Preferred Embodiments of the Invention

As shown in FIG. 2, the device for processing data caching comprises a data caching control module 101 and a memory 102 connected with the data caching control module 101, and further comprises a data detecting module 103 connected with the data caching control module 101;
the data caching control module 101 is configured to cache received data in the memory 102, and read out the data cached in the memory after completing caching, and it is further configured to provide cached data to be written and a memory space address for storing the cached data in the memory for the data detecting module before writing the cached data into the memory; it is further configured to, after reading out the cached data from the memory space address of the memory, provide the cached data that have been read out for the data detecting module; the data caching control module is further configured to acquire from the data detecting module normal or abnormal state of a memory space in the memory, and store cached data only into normal memory spaces and isolate the abnormal memory spaces.

The data detecting module 103 is configured to judge whether the cached data that have been read out are the same as the cached data to be written, and if so, decide that the memory space in the memory for storing the cached data is normal; if not, decide that the memory space in the memory for storing the cached data is abnormal, and inform the data caching control module of the normal or abnormal state of the memory space in the memory;
as shown in FIG. 3, the data detecting module 103 comprises a data input control unit 301, a storage unit 202 and a data output control unit 203 that are connected in sequence;
the data input control unit 201 is configured to, after obtaining from the data caching control module the cached data to be written, generate first check data according to the cached data to be written and store the first check data in the storage unit; after obtaining the cached data that have been read out from the data caching control module, generate second check data according to the cached data that have been read out; when the first check data are judged to be the same as the second check data, decide that the memory space in the memory for storing the cached data is normal; when the first check data are judged to be different from the second check data, decide that the memory space in the memory for storing the cached data is abnormal, and store the normal or abnormal state of the memory space in the memory for storing the cached data in the storage unit; or, obtain from the data caching control module the cached data to be written and store the cached data to be written into the storage unit; after obtaining the cached data that have been read out from the data caching control module, when the cached data that have been read out are the same as the stored cached data to be written, decide that the memory space in the memory for storing the cached data is normal; when the cached data that have been read out are different from the stored cached data to be written, decide that the memory space in the memory for storing the cached data is abnormal.

The data output control unit 203 is configured to obtain the normal or abnormal state of the memory space in the memory for storing the cached data from the storage unit, and inform the data caching control module of the state of the memory space.

The storage unit 202 is configured to maintain a memory mapping table, wherein composition elements of the memory mapping table correspond to memory space segments of the memory one by one, the space occupied by the composition element of the memory mapping table is one bit (for example, when the bit value is 1, it indicates that the memory space segment corresponding to this composition element is normal, and when the bit value is 0, it indicates that the memory space segment corresponding to this composition element is abnormal). The capacity of the memory space segment corresponding to each composition element of the memory mapping table may be the same or not, and in order to facilitate implementation of the storing flow, the capacity of the memory space segment is generally configured to be the same (for example 1K bits for all segments). The storage unit 202 initializes the memory mapping table when the device is started up, and it is defaulted that every memory space address is in normal state. After deciding the state of a memory space segment, the data input control unit 201 writes the state of the memory space segment into the memory mapping table; the data output control unit 203 provides the memory mapping table to the data caching control module 101, and the data caching control module 101, when storing new cached data, inquires this memory mapping table such that the data are stored only in the memory spaces marked as normal.

The above technical scheme may also be implemented in the following various ways:
the data input control unit 201, after obtaining from the data caching control module the cached data to be written, generates the first check data according to the cached data to be written and sends the first check data to the data caching control module 101, and the data caching control module 101 stores both the cached data to be written and the first check data into the memory 102; the data output control unit 203, after obtaining the cached data that have been read out and corresponding first check data from the data caching control module 101, generates second check data according to the cached data that have been read out, and if it is judged that the first check data are the same as the second check data, decides that the memory space in the memory for storing the cached data is normal; if it is judged that the first check data are different form the second check data, decides that the memory space in the memory for storing the cached data is abnormal, and stores the normal or abnormal state of the memory space in the memory for storing the cached data in the storage unit 202;
or, the data input control unit 201, after obtaining from the data caching control module 101 the cached data to be written, generates the first check data according to the cached data to be written and stores the first check data into the storage unit 202; the data output control unit 203, after obtaining the cached data that have been read out from the data caching control module 101, generates the second check data according to the cached data that have been read out, and obtains the first check data from the storage unit 202, and if it is judged that the first check data are the same as the second check data, decide that the memory space in the memory for storing the cached data is normal; if it is judged that the first check data are different from the second check data, decide that the memory space in the memory for storing the cached data is abnormal, and store the normal or abnormal state of the memory space in the memory for storing the cached data in the storage unit 202;
or, the data input control unit 201 obtains the cached data to be written from the data caching control module 101 and stores the cached data to be written into the storage unit 202; the data output control unit 203, after obtaining the cached data that have been read out from the data caching control module 101, compare the cached data that have been read out with the stored cached data to be written, if the cached data that have been read out are the same as the stored cached data to be written, decides that the memory space in the memory for storing the cached data is normal; if the cached data that have been read out are different from the stored cached data to be written, decides that the memory space in the memory for storing the cached data is abnormal, and stores the normal or abnormal state of the memory space in the memory for storing the cached data in the storage unit 202;
or, the data input control unit 201, after obtaining from the data caching control module 101 the cached data to be written, generates the first check data according to the cached data to be written and stores the first check data in the storage unit 202; the data output control unit 203, after obtaining the cached data that have been read out from the data caching control module 101, generates the second check data according to the cached data that have been read out; then the data input control unit 201, if judging that the first check data are the same as the second check data, decides that the memory space in the memory for storing the cached data is normal; if judging that the first check data are different from the second check data, decides that the memory space in the memory for storing the cached data is abnormal, and stores the normal or abnormal state of the memory space in the memory for storing the cached data in the storage unit 202;
the data caching control module 101 may be configured to acquire the normal or abnormal state of the memory space in the memory by reading the storage unit 202.

In the above device, the physical storage areas are marked by creating a mapping link table of data slices, the written data are copied, and the stored data are verified when the data are read out, the error data slices are isolated, whether an unsafe memory space (i.e., a memory space that may cause a data storage error due to hardware) exists in the memory can be quickly detected, and the reliability is improved by reducing the error rate of data caching. Compared with the ECC fault-tolerance method in the related art, the present invention does not need to generate redundant data, and can facilitate management of memory space addresses in the memory and is easy to implement.

The method according to the example of the present invention comprises: storing cached data into a memory; after reading out the cached data from a memory space address for storing the cached data in the memory, judging whether the cached data that have been read out are the same as the cached data to be written before the storing, if so, then deciding that the memory space for storing the cached data in the memory is normal; if not, then deciding that the memory space for storing the cached data in the memory is abnormal; and when the cached data is stored during the subsequent data caching process, storing the cached data only into the memory spaces in normal state in the memory.

Specifically, the method for improving the reliability of data caching in a memory by using the device shown in FIG. 2 and FIG. 3 comprises the following steps:
step 1, starting the device after powering on or reset;
step 2, the data input control module 201 writing the initialization values of the mapping link table into the mapping table automatically, and storing them into the storage unit 202, wherein, the values of all composition elements of the mapping table are set to be 1 initially to indicate that every memory space of the memory is normal;
step 3, the device turning on the detection state of the memory;
step 4, before the data caching control module 101 writes the cached data into the memory 102, the data input control module 201 acquiring from the data caching control module 101 the cached data to be written and the memory space address in the memory for storing the cached data, and generating first check data according to the cached data to be written and storing the first check data in the storage unit 202;
   in this step, the method for generating check data according to the cached data to be written is not defined in the present invention, and a person skilled in the art may adopt any method for generating check data with which he is familiar.
step 5, the data caching control module 101 storing the cached data in the memory 102;
step 6, when the data caching control module 101 needs to read out the cached data from the memory, the data output control module 203 obtaining from the data caching control module 101 the cached data that have been read out and the memory space address in the memory for storing the cached data, and generating second check data according to the cached data that have been read out;
step 7, the data input control module 201 judging whether the first check data corresponding to the memory space address are the same with the second check data, if not, marking the value of the composition element corresponding to the memory space address in the memory for storing the cached data to be 0 in the mapping table of the memory to indicate that this memory space is abnormal, and informing the data caching control module 101 of the updated memory mapping table; if they are the same, not marking the memory mapping table;
step 8, in subsequent data caching operation, the data caching control module 101 storing data only into the memory space addresses indicated by the composition elements whose values are 1 in the memory mapping table.

In the above method, the mode of storing the generated first check data into an external memory (since generally the data width of an external memory is slightly larger than that of the data in the data slices) and directly comparing the generated second check data with the first check data that have been read out form the memory may also be adopted, i.e., after the first check data are generated, the cached data to be written and the corresponding first check data are both stored in the memory; when reading the data, the cached data and the corresponding first check data are read out, second check data are generated according to the cached data that have been read out, and then whether the first check data and the second check data are the same is judged so as to judge whether the cached data that have been read out and the cached data to be written before storing are the same or not.

Specifically, in the above step 4, the data input control module 201 generates the first check data according to the cached data to be written and sends them to the data caching control module 101;
in step 5, the data caching control module 101 stores the cached data and the first check data in the memory 102;
in step 6, the data output control module 203 obtains the cached data that have been read out, the corresponding first check data and the memory space address in the memory for storing the cached data from the data caching control module 101, and generates the second check data according to the cached data that have been read out;
in step 7, the data output control module 203 judges whether the first check data corresponding to the memory space address are the same with the second check data, and if not, the value of the composition element corresponding to the memory space address in the memory for storing the cached data is marked to be 0 in the mapping table of the memory to indicate that this memory space is abnormal; if yes, the memory mapping table is not marked.

Other steps are the same with those described above.

The above method can conveniently detect whether an unsafe memory space exists in the memory, and further improve the reliability of data caching. Moreover, the present invention is applicable to a hardware that involves a large amount of data dynamic caching and data splitting processing and requires reliability of data caching, and is typically applicable to a route switching device.

Although the present invention is described with reference to specific examples, modifications and variations can be made to the present invention without departing from the scope of the present invention for a person skilled in the art. Such modifications and variations are regarded as within the scope of the present invention and the scope of the attached claims.

### Industrial Applicability

The method and device for processing data caching provided in the present invention can be implemented with simple code migration and may be directly applied to an existing device for data caching to detect whether an unsafe memory space exists in the memory, thus improving the reliability of data caching.

## Claims

1. A device for processing data caching, comprising a data caching control module (101) connected with a memory (102), wherein the data caching control module (101) is configured to cache received data in the memory (102), and read out the data cached in the memory (102) after completing caching, and the device further comprises a data detecting module (103) connected with the data caching control module (101);
the data caching control module (101) is further configured to provide cached data to be written and a memory space address for storing the cached data in the memory (102) for the data detecting module (103) before writing the cached data into the memory; after reading out the cached data from the memory space address of the memory (102), provide the cached data that have been read out for the data detecting module (103); the data caching control module (101) is further configured to acquire from the data detecting module (103) normal or abnormal state of a memory space in the memory (102), and store subsequent cached data only into normal memory spaces;
the data detecting module (103) is configured to judge whether the cached data that have been read out are the same as the cached data to be written, and if so, decide that the memory space in the memory (102) for storing the cached data is normal; if not, decide that the memory space in the memory (102) for storing the cached data is abnormal.

2. The device according to claim 1, wherein
the data detecting module (103) comprises a data input control unit (201), a storage unit (202) and a data output control unit (203) that are connected in sequence;
the data input control unit (201) is configured to, after obtaining from the data caching control module (101) the cached data to be written, generate first check data according to the cached data to be written and store the first check data in the storage unit (202); the data input control unit (201) is further configured to, after obtaining the cached data that have been read out from the data caching control module (101), generate second check data according to the cached data that have been read out, and when the first check data are judged to be the same as the second check data, decide that the memory space in the memory (102) for storing the cached data is normal; when the first check data are judged to be different from the second check data, decide that the memory space in the memory (102) for storing the cached data is abnormal, and store the normal or abnormal state of the memory space in the memory (102) for storing the cached data in the storage unit (202);
the data output control unit (203) is configured to obtain the normal or abnormal state of the memory space in the memory (102) for storing the cached data from the storage unit (202), and inform the data caching control module (101) of the state of the memory space.

3. The device according to claim 1, wherein
the data detecting module comprises a data input control unit (201), a storage unit (202) and a data output control unit (203) that are connected in sequence;
the data input control unit (201) is configured to, after obtaining the cached data to be written from the data caching control module (101), store the cached data to be written into the storage unit (202); the data input control unit (201) is further configured to, after obtaining the cached data that have been read out from the data caching control module (101), compare the cached data that have been read out with the stored cached data to be written, when the cached data that have been read out are the same as the stored cached data to be written, decide that the memory space in the memory (102) for storing the cached data is normal; when the cached data that have been read out are different from the stored cached data to be written, decide that the memory space in the memory (102) for storing the cached data is abnormal, and store the normal or abnormal state of the memory space in the memory (102) for storing the cached data in the storage unit (202);
the data output control unit (203) is configured to obtain the normal or abnormal state of the memory space in the memory (102) for storing the cached data from the storage unit (202), and inform the data caching control module (101) of the state of the memory space.

4. The device according to claim 1, wherein
the data detecting module comprises a data input control unit (201), a storage unit (202) and a data output control unit (203) that are connected in sequence;
the data input control unit (201) is configured to, after obtaining from the data caching control module (101) the cached data to be written, generate first check data according to the cached data to be written and store the first check data in the storage unit (202);
the data output control unit (203) is configured to, after obtaining the cached data that have been read out from the data caching control module (101), generate second check data according to the cached data that have been read out, obtain the first check data from the storage unit (202), and when the first check data are judged to be the same as the second check data, decide that the memory space in the memory (102) for storing the cached data is normal; when the first check data are judged to be different from the second check data, decide that the memory space in the memory (102) for storing the cached data is abnormal, and store the normal or abnormal state of the memory space in the memory (102) for storing the cached data in the storage unit (202);
the data caching control module (101) is further configured to acquire the normal or abnormal state of the memory space in the memory (102) by reading the storage unit (202).

5. The device according to claim 1, wherein
the data detecting module comprises a data input control unit (201), a storage unit (202) and a data output control unit (203) that are connected in sequence;
the data input control unit (201) is configured to, after obtaining from the data caching control module (101) the cached data to be written, generate first check data according to the cached data to be written and send the first check data to the data caching control module (101);
the data output control unit (203) is configured to, obtain the cached data that have been read out and the corresponding first check data from the data caching control module (101), generate second check data according to the cached data that have been read out, and when the first check data are judged to be the same as the second check data, decide that the memory space in the memory (102) for storing the cached data is normal; when the first check data are judged to be different from the second check data, decide that the memory space in the memory (102) for storing the cached data is abnormal, and store the normal or abnormal state of the memory space in the memory (102) for storing the cached data in the storage unit (202);
the data caching control module (101) is further configured to receive the first check data sent by the data input control unit (201), and store both the cached data to be written and the first check data in the memory (102); and acquire the normal or abnormal state of the memory space in the memory (102) by reading the storage unit (202).

6. The device according to any one of claims 2 to 5, wherein
the storage unit (202) is configured to maintain a memory mapping table, wherein composition elements of the memory mapping table correspond to memory space segments of the memory (102) one by one, and each of the composition elements represents a state of a corresponding memory space segment;
the data input control unit (201) is further configured to, after deciding the state of a memory space segment, write the state of the memory space segment into the memory mapping table;
the data output control unit (203) is further configured to provide the memory mapping table to the data caching control module (101).

7. The device according to claim 6, wherein
the space occupied by the composition element of the memory mapping table is one bit, and the capacity of the memory space segment corresponding to each composition element of the memory mapping table is the same.

8. The device according to claim 6, wherein
the device is applied to a route switching device.

9. A method for processing data caching executed in a device comprising a data caching control module (101) and a memory (102) connected with the data caching control module (101), and a data detecting module (103) connected with the data caching control module (101), comprising following steps of:
storing cached data into a memory;
after reading out the cached data from a memory space address for storing the cached data in the memory, judging whether the cached data that have been read out are the same as the cached data to be written before the storing, if so, then deciding that the memory space in the memory for storing the cached data is normal; if not, then deciding that the memory space in the memory for storing the cached data is abnormal; and
when storing cached data during a subsequent data caching process, storing the cached data only into memory spaces in normal state in the memory.

10. The method according to claim 9, wherein
in the step of judging whether the cached data that have been read out are the same as the cached data to be written before the storing, whether the cached data that have been read out are the same as the cached data to be written before the storing is judged by way of judging check data.

11. The method according to claim 10, wherein
before the step of storing cached data into a memory, the method further comprises: generating first check data according to the cached data to be written before the storing and storing the first check data;
after reading out the cached data from the memory space address for storing the cached data in the memory, the method further comprises: generating second check data according to the cached data that have been read out;
in the step of judging whether the cached data that have been read out are the same as the cached data to be written before the storing, whether the cached data that have been read out are the same as the cached data to be written before the storing is judged by judging whether the first check data are the same as the second check data.

12. The method according to claim 10, wherein
before the step of storing cached data into a memory, the method further comprises: generating first check data according to the cached data to be written before the storing;
the step of storing cached data into a memory comprises: storing both the cached data to be written and the first check data into the memory;
in the step of reading out the cached data, the cached data and the corresponding first check data are read out;
after the step of reading out the cached data, the method further comprises: generating second check data according to the cached data that have been read out;
in the step of judging whether the cached data that have been read out are the same as the cached data to be written before the storing, whether the cached data that have been read out are the same as the cached data to be written before the storing is judged by judging whether the first check data are the same as the second check data.

13. The method according to claim 9, further comprising:
storing a normal or abnormal state of the memory space for storing the cached data;
wherein, the state of the memory space in the memory is recorded by maintaining a memory mapping table, composition elements of the memory mapping table correspond to memory space segments of the memory one by one, and each of the composition elements represents a state of a corresponding memory space segment; the judged state of the memory space segment is written into the memory mapping table.

14. The method according to claim 13, wherein
the space occupied by the composition element of the memory mapping table is one bit, and the capacity of the memory space segment corresponding to each composition element of the memory mapping table is the same.

## Patentansprüche

1. Vorrichtung zur Datencacheverarbeitung, die ein Datencache-Steuerungsmodul (101) umfasst, das mit einem Speicher (102) verbunden ist, wobei das Datencache-Steuerungsmodul (101) ausgestaltet ist, um empfangene Daten in dem Speicher (102) zwischen zu speichern, und um die Daten, die in dem Speicher (102) zwischengespeichert sind, nach Abschluss des Zwischenspeicherns auszulesen, und die Vorrichtung ferner ein Datendetektionsmodul (103) umfasst, das mit dem Datencache-Steuerungsmodul (101) verbunden ist;
wobei das Datencache-Steuerungsmodul (101) ferner ausgestaltet ist, um zwischengespeicherte Daten, die geschrieben werden sollen, und eine Speicherplatzadresse zum Speichern der zwischengespeicherten Daten in dem Speicher (102) für das Datendetektionsmodul (103) bereitzustellen, bevor die zwischengespeicherten Daten in den Speicher geschrieben werden; um nach dem Auslesen der zwischengespeicherten Daten aus der Speicherplatzadresse des Speichers (102) die zwischengespeicherten Daten, die ausgelesen worden sind, für das Datendetektionsmodul (103) bereitzustellen; wobei das Datencache-Steuerungsmodul (101) ferner ausgestaltet ist, um von dem Datendetektionsmodul (103) einen normalen oder einen nicht normalen Zustand eines Speicherplatzes in dem Speicher (102) zu beschaffen und um anschließend zwischengespeicherte Daten nur in normalen Speicherplätzen zu speichern;
wobei das Datendetektionsmodul (103) ausgestaltet ist, um zu beurteilen, ob die zwischengespeicherten Daten, die ausgelesen worden sind, die gleichen wie die zwischengespeicherten Daten sind, die geschrieben werden sollen, und wenn dem so ist, zu entscheiden, dass der Speicherplatz in dem Speicher (102) zum Speichern der zwischengespeicherten Daten normal ist; wenn nicht, zu entscheiden, dass der Speicherplatz in dem Speicher (102) zum Speichern der zwischengespeicherten Daten nicht normal ist.

2. Vorrichtung nach Anspruch 1, wobei
das Datendetektionsmodul (103) eine Dateneingabesteuerungseinheit (201), eine Massenspeichereinheit (202) und eine Datenausgabesteuerungseinheit (203) umfasst, die in Reihe verbunden sind;
die Dateneingabesteuerungseinheit (201) ausgestaltet ist, um nach dem Beschaffen der zwischengespeicherten Daten, die geschrieben werden sollen, von dem Datencache-Steuerungsmodul (101), erste Prüfdaten in Übereinstimmung mit den zwischengespeicherten Daten, die geschrieben werden sollen, zu erzeugen, und um die ersten Prüfdaten in der Massenspeichereinheit (202) zu speichern; die Dateneingabesteuerungseinheit (201) ferner ausgestaltet ist, um nach dem Beschaffen der zwischengespeicherten Daten, die von dem Datencache-Steuerungsmodul (101) ausgelesen worden sind, zweite Prüfdaten in Übereinstimmung mit den zwischengespeicherten Daten, die ausgelesen worden sind, zu erzeugen, und wenn beurteilt wird, dass die ersten Prüfdaten gleich den zweiten Prüfdaten sind, zu entscheiden, dass der Speicherplatz in dem Speicher (102) zum Speichern der zwischengespeicherten Daten normal ist; wenn beurteilt wird, dass sich die ersten Prüfdaten von den zweiten Prüfdaten unterscheiden, zu entscheiden, dass der Speicherplatz in dem Speicher (102) zum Speichern der zwischengespeicherten Daten nicht normal ist, und um den normalen oder den nicht normalen Zustand des Speicherplatzes in dem Speicher (102) zum Speichern der zwischengespeicherten Daten in der Massenspeichereinheit (202) zu speichern;
die Datenausgabesteuerungseinheit (203) ausgestaltet ist, um den normalen oder den nicht normalen Zustand des Speicherplatzes in dem Speicher (102) zum Speichern der zwischengespeicherten Daten von der Massenspeichereinheit (202) zu beschaffen, und um das Datencache-Steuerungsmodul (101) über den Zustand des Speicherplatzes zu informieren.

3. Vorrichtung nach Anspruch 1, wobei
das Datendetektionsmodul eine Dateneingabesteuerungseinheit (201), eine Massenspeichereinheit (202) und eine Datenausgabesteuerungseinheit (203) umfasst, die in Reihe verbunden sind;
die Dateneingabesteuerungseinheit (201) ausgestaltet ist, um nach Beschaffen der zwischengespeicherten Daten, die geschrieben werden sollen, von dem Datencache-Steuerungsmodul (101), die zwischengespeicherten Daten, die geschrieben werden sollen, in der Massenspeichereinheit (202) zu speichern; die Dateneingabesteuerungseinheit (201) ferner ausgestaltet ist, um nach Beschaffen der zwischengespeicherten Daten, die von dem Datencache-Steuerungsmodul (101) ausgelesen worden sind, die zwischengespeicherten Daten, die ausgelesen worden sind, mit den gespeicherten zwischengespeicherten Daten, die geschrieben werden sollen, zu vergleichen, wenn die zwischengespeicherten Daten, die ausgelesen worden sind, gleich den gespeicherten zwischengespeicherten Daten sind, die geschrieben werden sollen, zu entscheiden, dass der Speicherplatz in dem Speicher (102) zum Speichern der zwischengespeicherten Daten normal ist; wenn sich die zwischengespeicherten Daten, die ausgelesen worden sind, von den gespeicherten zwischengespeicherten Daten unterscheiden, die geschrieben werden sollen, zu entscheiden, dass der Speicherplatz in dem Speicher (102) zum Speichern der zwischengespeicherten Daten nicht normal ist, und um den normalen oder den nicht normalen Zustand des Speicherplatzes in dem Speicher (102) zum Speichern der zwischengespeicherten Daten in der Massenspeichereinheit (202) zu speichern;
die Datenausgabesteuerungseinheit (203) ausgestaltet ist, um den normalen oder den nicht normalen Zustand des Speicherplatzes in dem Speicher (102) zum Speichern der zwischengespeicherten Daten von der Massenspeichereinheit (202) zu beschaffen, und um das Datencache-Steuerungsmodul (101) über den Zustand des Speicherplatzes zu informieren.

4. Vorrichtung nach Anspruch 1, wobei
das Datendetektionsmodul eine Dateneingabesteuerungseinheit (201), eine Massenspeichereinheit (202) und eine Datenausgabesteuerungseinheit (203), die in Reihe verbunden sind, umfasst;
die Dateneingabesteuerungseinheit (201) ausgestaltet ist, um nach Beschaffen der zwischengespeicherten Daten, die geschrieben werden sollen, von dem Datencache-Steuerungsmodul (101) erste Prüfdaten in Übereinstimmung mit den zwischengespeicherten Daten, die geschrieben werden sollen, zu erzeugen und die ersten Prüfdaten in der Massenspeichereinheit (202) zu speichern;
die Datenausgabesteuerungseinheit (203) ausgestaltet ist, um nach Beschaffen der zwischengespeicherten Daten, die von dem Datencache-Steuerungsmodul (101) ausgelesen worden sind, zweite Prüfdaten in Übereinstimmung mit den zwischengespeicherten Daten, die ausgelesen worden sind, zu erzeugen, die ersten Prüfdaten von der Massenspeichereinheit (202) zu beschaffen, und wenn beurteilt wird, dass die ersten Prüfdaten gleich den zweiten Prüfdaten sind, zu entscheiden, dass der Speicherplatz in dem Speicher (102) zum Speichern der zwischengespeicherten Daten normal ist; wenn beurteilt wird, dass sich die ersten Prüfdaten von den zweiten Prüfdaten unterscheiden, zu entscheiden, dass der Speicherplatz in dem Speicher (102) zum Speichern der zwischengespeicherten Daten nicht normal ist, und um den normalen oder den nicht normalen Zustand des Speicherplatzes in dem Speicher (102) zum Speichern der zwischengespeicherten Daten in der Massenspeichereinheit (202) zu speichern;
das Datencache-Steuerungsmodul (101) ferner ausgestaltet ist, um den normalen oder den nicht normalen Zustand des Speicherplatzes in dem Speicher (102) durch Lesen der Massenspeichereinheit (202) zu beschaffen.

5. Vorrichtung nach Anspruch 1, wobei
das Datendetektionsmodul eine Dateneingabesteuerungseinheit (201), eine Massenspeichereinheit (202) und eine Datenausgabesteuerungseinheit (203), die in Reihe verbunden sind, umfasst;
die Dateneingabesteuerungseinheit (201) ausgestaltet ist, um nach Beschaffen der zwischengespeicherten Daten, die geschrieben werden sollen, von dem Datencache-Steuerungsmodul (101) erste Prüfdaten in Übereinstimmung mit den zwischengespeicherten Daten, die geschrieben werden sollen, zu erzeugen und um die ersten Prüfdaten an das Datencache-Steuerungsmodul (101) zu senden;
die Datenausgabesteuerungseinheit (203) ausgestaltet ist, um die zwischengespeicherten Daten, die ausgelesen worden sind, und die entsprechenden ersten Prüfdaten von dem Datencache-Steuerungsmodul (101) zu beschaffen, um zweite Prüfdaten in Übereinstimmung mit den zwischengespeicherten Daten, die ausgelesen worden sind, zu erzeugen, und wenn beurteilt wird, dass die ersten Prüfdaten gleich den zweiten Prüfdaten sind, zu entscheiden, dass der Speicherplatz in dem Speicher (102) zum Speichern der zwischengespeicherten Daten normal ist; wenn beurteilt wird, dass sich die ersten Prüfdaten von den zweiten Prüfdaten unterscheiden, zu entscheiden, dass der Speicherplatz in dem Speicher (102) zum Speichern der zwischengespeicherten Daten nicht normal ist, und um den normalen oder den nicht normalen Zustand des Speicherplatzes in dem Speicher (102) zum Speichern der zwischengespeicherten Daten in der Massenspeichereinheit (202) zu speichern;
das Datencache-Steuerungsmodul (101) ferner ausgestaltet ist, um die ersten Prüfdaten zu empfangen, die von der Dateneingabesteuerungseinheit (201) gesendet wurden, und um sowohl die zwischengespeicherten Daten, die geschrieben werden sollen, als auch die ersten Prüfdaten in dem Speicher (102) zu speichern; und um den normalen oder den nicht normalen Zustand des Speicherplatzes in dem Speicher (102) durch Lesen der Massenspeichereinheit (202) zu beschaffen.

6. Vorrichtung nach einem der Ansprüche 2 bis 5, wobei
die Massenspeichereinheit (202) ausgestaltet ist, um eine Speicherzuordnungstabelle zu pflegen, wobei Strukturelemente der Speicherzuordnungstabelle Speicherplatzsegmenten des Speichers (102) eins zu eins entsprechen, und jedes der Strukturelemente einen Zustand eines entsprechenden Speicherplatzsegments repräsentiert;
die Dateneingabesteuerungseinheit (201) ferner ausgestaltet ist, um nach Entscheiden über den Zustand eines Speicherplatzsegments den Zustand des Speicherplatzsegments in die Speicherzuordnungstabelle zu schreiben;
die Datenausgabesteuerungseinheit (203) ferner ausgestaltet ist, um die Speicherzuordnungstabelle für das Datencache-Steuerungsmodul (101) bereitzustellen.

7. Vorrichtung nach Anspruch 6, wobei
der Platz, der durch das Strukturelement der Speicherzuordnungstabelle belegt wird, 1 Bit ist, und die Kapazität des Speicherplatzsegments, das jedem Strukturelement der Speicherzuordnungstabelle entspricht, gleich ist.

8. Vorrichtung nach Anspruch 6, wobei
die Vorrichtung auf eine Routenumschaltvorrichtung angewendet wird.

9. Verfahren zur Datencacheverarbeitung, das in einer Vorrichtung ausgeführt wird, die ein Datencache-Steuerungsmodul (101) und einen mit dem Datencache-Steuerungsmodul (101) verbundenen Speicher (102) sowie ein mit dem Datencache-Steuerungsmodul (101) verbundenes Datendetektionsmodul (103) umfasst, wobei das Verfahren die folgenden Schritte umfasst, dass:
zwischengespeicherte Daten in einem Speicher gespeichert werden;
nach Auslesen der zwischengespeicherten Daten aus einer Speicherplatzadresse zum Speichern der zwischengespeicherten Daten in dem Speicher beurteilt wird, ob die zwischengespeicherten Daten, die ausgelesen worden sind, gleich den zwischengespeicherten Daten, die geschrieben werden sollen, vor dem Speichern sind, wenn ja, dann entschieden wird, dass der Speicherplatz in dem Speicher zum Speichern der zwischengespeicherten Daten normal ist; wenn nicht, dann entschieden wird, dass der Speicherplatz in dem Speicher zum Speichern der zwischengespeicherten Daten nicht normal ist; und
wenn zwischengespeicherte Daten während eines nachfolgenden Datencacheprozesses gespeichert werden, die zwischengespeicherten Daten nur in Speicherplätzen mit normalem Zustand in dem Speicher gespeichert werden.

10. Verfahren nach Anspruch 9, wobei
in dem Schritt des Beurteilens, ob die zwischengespeicherten Daten, die ausgelesen worden sind, gleich den zwischengespeicherten Daten, die geschrieben werden sollen, vor dem Speichern sind, mithilfe des Beurteilens von Prüfdaten beurteilt wird, ob die zwischengespeicherten Daten, die ausgelesen worden sind, gleich den zwischengespeicherten Daten, die geschrieben werden sollen, vor dem Speichern sind.

11. Verfahren nach Anspruch 10, wobei
das Verfahren vor dem Schritt des Speicherns zwischengespeicherter Daten in einem Speicher ferner umfasst, dass:
erste Prüfdaten in Übereinstimmung mit den zwischengespeicherten Daten, die geschrieben werden sollen, vor dem Speichern erzeugt werden und die ersten Prüfdaten gespeichert werden;
das Verfahren nach Auslesen der zwischengespeicherten Daten aus der Speicherplatzadresse zum Speichern der zwischengespeicherten Daten in dem Speicher ferner umfasst, dass: zweite Prüfdaten in Übereinstimmung mit den zwischengespeicherten Daten, die ausgelesen worden sind, erzeugt werden;
in dem Schritt des Beurteilens, ob die zwischengespeicherten Daten, die ausgelesen worden sind, gleich den zwischengespeicherten Daten, die geschrieben werden sollen, vor dem Speichern sind, beurteilt wird, ob die zwischengespeicherten Daten, die ausgelesen worden sind, gleich den zwischengespeicherten Daten, die geschrieben werden sollen, vor dem Speichern sind, indem beurteilt wird, ob die ersten Prüfdaten gleich den zweiten Prüfdaten sind.

12. Verfahren nach Anspruch 10, wobei
das Verfahren vor dem Schritt des Speicherns zwischengespeicherter Daten in einem Speicher ferner umfasst, dass: erste Prüfdaten in Übereinstimmung mit den zwischengespeicherten Daten, die geschrieben werden sollen, vor dem Speichern erzeugt werden;
der Schritt des Speicherns zwischengespeicherter Daten in einem Speicher umfasst, dass: sowohl die zwischengespeicherten Daten, die geschrieben werden sollen, als auch die ersten Prüfdaten in dem Speicher gespeichert werden;
in dem Schritt des Auslesens der zwischengespeicherten Daten, die zwischengespeicherten Daten und die entsprechenden ersten Prüfdaten ausgelesen werden;
das Verfahren nach dem Schritt des Auslesens der zwischengespeicherten Daten ferner umfasst, dass: zweite Prüfdaten in Übereinstimmung mit den zwischengespeicherten Daten, die ausgelesen worden sind, erzeugt werden;
in dem Schritt des Beurteilens, ob die zwischengespeicherten Daten, die ausgelesen worden sind, gleich den zwischengespeicherten Daten, die geschrieben werden sollen, vor dem Speichern sind, beurteilt wird, ob die zwischengespeicherten Daten, die ausgelesen worden sind, gleich den zwischengespeicherten Daten, die geschrieben werden sollen, vor dem Speichern sind, indem beurteilt wird, ob die ersten Prüfdaten gleich den zweiten Prüfdaten sind.

13. Verfahren nach Anspruch 9, das ferner umfasst, dass:
ein normaler oder ein nicht normaler Zustand des Speicherplatzes zum Speichern der zwischengespeicherten Daten gespeichert wird;
wobei der Zustand des Speicherplatzes in dem Speicher aufgezeichnet wird, indem eine Speicherzuordnungstabelle gepflegt wird, Strukturelemente der Speicherzuordnungstabelle Speicherplatzsegmenten des Speichers eins zu eins entsprechen und jedes der Strukturelemente einen Zustand eines entsprechenden Speicherplatzsegments repräsentiert; wobei der beurteilte Zustand des Speicherplatzsegments in die Speicherzuordnungstabelle geschrieben wird.

14. Verfahren nach Anspruch 13, wobei
der Platz, der von dem Strukturelement der Speicherzuordnungstabelle belegt wird, 1 Bit ist, und die Kapazität des Speicherplatzsegments, das jedem Strukturelement der Speicherzuordnungstabelle entspricht, gleich ist.

## Revendications

1. Dispositif destiné au traitement de mise en antémémoire de données, comprenant un module de commande de mise en antémémoire de données (101) connecté à une mémoire (102), dans lequel le module de commande de mise en antémémoire de données (101) est conçu pour mettre en antémémoire des données reçues, dans la mémoire (102), et pour lire les données mises en antémémoire dans la mémoire (102) après avoir achevé la mise en antémémoire, et le dispositif comprend en outre un module de détection de données (103) connecté au module de commande de mise en antémémoire de données (101) ;
le module de commande de mise en antémémoire de données (101) est conçu en outre pour fournir des données mises en antémémoire à écrire et une adresse d'espace mémoire destinée au stockage des données mises en antémémoire dans la mémoire (102) au module de détection de données (103) avant l'écriture des données mises en antémémoire dans la mémoire ; après avoir lu les données mises en antémémoire à l'adresse d'espace mémoire de la mémoire (102), pour fournir les données mises en antémémoire qui ont été lues au module de détection de données (103) ; le module de commande de mise en antémémoire de données (101) est conçu en outre pour acquérir à partir du module de détection de données (103) un état normal ou anormal d'un espace mémoire dans la mémoire (102), et pour ne stocker les données mises en antémémoire ultérieures que dans des espaces mémoire normaux ;
le module de détection de données (103) est conçu pour évaluer si les données mises en antémémoire qui ont été lues sont les mêmes que les données mises en antémémoire à écrire, et dans l'affirmative, pour décider que l'espace mémoire dans la mémoire (102) destiné au stockage des données mises en antémémoire est normal ; dans la négative, pour décider que l'espace mémoire dans mémoire (102) destiné au stockage des données mises en antémémoire est anormal.

2. Dispositif selon la revendication 1, dans lequel :
le module de détection de données (103) comprend une unité de commande d'entrée de données (201), une unité de stockage (202) et une unité de commande de sortie de données (203) qui sont connectées successivement ;
l'unité de commande d'entrée de données (201) est conçue pour, après avoir obtenu du module de commande de mise en antémémoire de données (101) les données mises en antémémoire à écrire, produire des premières données de contrôle en fonction des données mises en antémémoire à écrire et stocker les premières données de contrôle dans l'unité de stockage (202) ; l'unité de commande d'entrée de données (201) est conçue en outre pour, après avoir obtenu les données mises en antémémoire qui ont été lues, à partir du module de commande de mise en antémémoire de données (101), produire des secondes données de contrôle en fonction des données mises en antémémoire qui ont été lues, et lorsqu'il est évalué que les premières données de contrôle sont les mêmes que les secondes données de contrôle, décider que l'espace mémoire dans la mémoire (102) destiné au stockage des données mises en antémémoire est normal ; lorsqu'il est évalué que les premières données de contrôle sont différentes des secondes données de contrôle, décider que l'espace mémoire dans la mémoire (102) destiné au stockage des données mises en antémémoire est anormal, et stocker l'état normal ou anormal de l'espace mémoire dans la mémoire (102) destiné au stockage des données mises en antémémoire, dans l'unité de stockage (202) ;
l'unité de commande de sortie de données (203) est conçue pour obtenir l'état normal ou anormal de l'espace mémoire dans la mémoire (102) destiné au stockage des données mises en antémémoire, à partir de l'unité de stockage (202), et informer le module de commande de mise en antémémoire de données (101) de l'état de l'espace mémoire.

3. Dispositif selon la revendication 1, dans lequel :
le module de détection de données comprend une unité de commande d'entrée de données (201), une unité de stockage (202) et une unité de commande de sortie de données (203) qui sont connectées successivement ;
l'unité de commande d'entrée de données (201) est conçue pour, après avoir obtenu les données mises en antémémoire à écrire, à partir du module de commande de mise en antémémoire de données (101), stocker les données mises en antémémoire à écrire, dans l'unité de stockage (202) ;
l'unité de commande d'entrée de données (201) est conçue en outre pour, après avoir obtenu les données mises en antémémoire qui ont été lues, à partir du module de commande de mise en antémémoire de données (101), comparer les données mises en antémémoire qui ont été lues aux données mises en antémémoire stockées à écrire, lorsque les données mises en antémémoire qui ont été lues sont les mêmes que les données mises en antémémoire stockées à écrire, décider que l'espace mémoire dans la mémoire (102) destiné au stockage des données mises en antémémoire est normal ; lorsque les données mises en antémémoire qui ont été lues sont différentes des données mises en antémémoire stockées à écrire, décider que l'espace mémoire dans la mémoire (102) destiné au stockage des données mises en antémémoire est anormal, et stocker l'état normal ou anormal de l'espace mémoire dans la mémoire (102) destiné au stockage des données mises en antémémoire, dans l'unité de stockage (202) ;
l'unité de commande de sortie de données (203) est conçue pour obtenir l'état normal ou anormal de l'espace mémoire dans la mémoire (102) destiné au stockage des données mises en antémémoire, à partir de l'unité de stockage (202), et informer le module de commande de mise en antémémoire de données (101) de l'état de l'espace mémoire.

4. Dispositif selon la revendication 1, dans lequel :
le module de détection de données comprend une unité de commande d'entrée de données (201), une unité de stockage (202) et une unité de commande de sortie de données (203) qui sont connectées successivement ;
l'unité de commande d'entrée de données (201) est conçue pour, après avoir obtenu du module de commande de mise en antémémoire de données (101) les données mises en antémémoire à écrire, produire des premières données de contrôle en fonction des données mises en antémémoire à écrire, et stocker les premières données de contrôle dans l'unité de stockage (202) ;
l'unité de commande de sortie de données (203) est conçue pour, après avoir obtenu les données mises en antémémoire qui ont été lues, à partir du module de commande de mise en antémémoire de données (101), produire des secondes données de contrôle en fonction des données mises en antémémoire qui ont été lues, obtenir les premières données de contrôle à partir de l'unité de stockage (202), lorsqu'il est évalué que les premières données de contrôle sont les mêmes que les secondes données de contrôle, décider que l'espace mémoire dans la mémoire (102) destiné au stockage des données mises en antémémoire est normal ; lorsqu'il est évalué que les premières données de contrôle sont différentes des secondes données de contrôle, décider que l'espace mémoire dans la mémoire (102) destiné au stockage des données mises en antémémoire est anormal, et stocker l'état normal ou anormal de l'espace mémoire dans la mémoire (102) destiné au stockage des données mises en antémémoire, dans l'unité de stockage (202) ;
le module de commande de mise en antémémoire de données (101) est conçu en outre pour acquérir l'état normal ou anormal de l'espace mémoire dans la mémoire (102) en lisant l'unité de stockage (202).

5. Dispositif selon la revendication 1, dans lequel :
le module de détection de données comprend une unité de commande d'entrée de données (201), une unité de stockage (202) et une unité de commande de sortie de données (203) qui sont connectées successivement ;
l'unité de commande d'entrée de données (201) est conçue pour, après avoir obtenu du module de commande de mise en antémémoire de données (101) les données mises en antémémoire à écrire, produire des premières données de contrôle en fonction des données mises en antémémoire à écrire, et envoyer les premières données de contrôle au module de commande de mise en antémémoire de données (101) ;
l'unité de commande de sortie de données (203) est conçue pour obtenir les données mises en antémémoire qui ont été lues et les premières données de contrôle correspondantes, à partir du module de commande de mise en antémémoire de données (101), produire des secondes données de contrôle en fonction des données mises en antémémoire qui ont été lues, et lorsqu'il est évalué que les premières données de contrôle sont les mêmes que les secondes données de contrôle, décider que l'espace mémoire dans la mémoire (102) destiné au stockage des données mises en antémémoire est normal ; lorsqu'il est évalué que les premières données de contrôle sont différentes des secondes données de contrôle, décider que l'espace mémoire dans la mémoire (102) destiné au stockage des données mises en antémémoire est anormal, et stocker l'état normal ou anormal de l'espace mémoire dans la mémoire (102) destiné au stockage des données mises en antémémoire, dans l'unité de stockage (202) ;
le module de commande de mise en antémémoire de données (101) est conçu en outre pour recevoir les premières données de contrôle envoyées par l'unité de commande d'entrée de données (201), et stocker à la fois les données mises en antémémoire à écrire et les premières données de contrôle dans la mémoire (102) ; et acquérir l'état normal ou anormal de l'espace mémoire dans la mémoire (102) en lisant l'unité de stockage (202).

6. Dispositif selon l'une quelconque des revendications 2 à 5, dans lequel :
l'unité de stockage (202) est conçue pour tenir à jour une table de mappage de mémoire, dans lequel les éléments de composition de la table de mappage de mémoire correspondent à des segments d'espaces mémoire de la mémoire (102), un à un, et chacun des éléments de composition représente un état de segment d'espace mémoire correspondant ;
l'unité de commande d'entrée de données (201) est conçue en outre pour, après avoir décidé de l'état d'un segment d'espace mémoire, écrire l'état du segment d'espace mémoire dans la table de mappage de mémoire ;
l'unité de commande de sortie de données (203) est conçue en outre pour fournir la table de mappage de mémoire au module de commande de mise en antémémoire de données (101).

7. Dispositif selon la revendication 6, dans lequel :
l'espace occupé par l'élément de composition de la table de mappage de mémoire est d'un bit, et la capacité du segment d'espace mémoire correspondant à chaque élément de composition de la table de mappage de mémoire est la même.

8. Dispositif selon la revendication 6, dans lequel :
le dispositif est appliqué à un dispositif de commutation de trajet.

9. Procédé de traitement de mise en antémémoire de données, exécuté dans un dispositif comprenant un module de commande de mise en antémémoire de données (101) et une mémoire (102) connectée au module de commande de mise en antémémoire de données (101), et un module de détection de données (103) connecté au module de commande de mise en antémémoire de données (101), comprenant les étapes suivantes :
stocker des données mises en antémémoire dans une mémoire ;
après avoir lu les données mises en antémémoire à une adresse d'espace mémoire destinée au stockage des données mises en antémémoire dans la mémoire, évaluer si les données mises en antémémoire qui ont été lues sont les mêmes que les données mises en antémémoire à écrire avant le stockage, dans l'affirmative, décider que l'espace mémoire dans la mémoire, destiné au stockage des données mises en antémémoire, est normal ; dans la négative, décider que l'espace mémoire dans mémoire, destiné au stockage des données mises en antémémoire, est anormal ; et
lors du stockage de données mises en antémémoire au cours d'un processus ultérieur de mise en antémémoire de données, ne stocker les données mises en antémémoire que dans des espaces mémoire à l'état normal dans la mémoire.

10. Procédé selon la revendication 9, dans lequel :
à l'étape d'évaluation de ce que les données mises en antémémoire qui ont été lues sont ou non les mêmes que les données mises en antémémoire à écrire avant le stockage, le fait que les données mises en antémémoire qui ont été lues sont ou non les mêmes que les données mises en antémémoire à écrire avant le stockage est évalué par évaluation de données de contrôle.

11. Procédé selon la revendication 10, dans lequel :
avant l'étape de stockage de données mises en antémémoire dans une mémoire, le procédé comprend en outre : la production de premières données de contrôle en fonction des données mises en antémémoire à écrire avant le stockage, et le stockage des premières données de contrôle ;
après la lecture des données mises en antémémoire à l'adresse d'espace mémoire destinée au stockage des données mises en antémémoire dans la mémoire, le procédé comprend en outre : la production de secondes données de contrôle en fonction des données mises en antémémoire qui ont été lues ;
à l'étape d'évaluation de ce que les données mises en antémémoire qui ont été lues sont ou non les mêmes que les données mises en antémémoire à écrire avant le stockage, le fait que les données mises en antémémoire qui ont été lues sont ou non les mêmes que les données mises en antémémoire à écrire avant le stockage est évalué par évaluation de ce que les premières données de contrôle sont ou non les mêmes que les secondes données de contrôle.

12. Procédé selon la revendication 10, dans lequel :
avant l'étape de stockage de données mises en antémémoire dans une mémoire, le procédé comprend en outre : la production de premières données de contrôle en fonction des données mises en antémémoire à écrire avant le stockage ;
l'étape de stockage de données mises en antémémoire dans une mémoire comprend : le stockage à la fois des données mises en antémémoire à écrire et des premières données de contrôle, dans la mémoire ;
à l'étape de lecture des données mises en antémémoire, les données mises en antémémoire et les premières données de contrôle correspondantes sont lues ;
après l'étape de lecture des données mises en antémémoire, le procédé comprend en outre : la production de secondes données de contrôle en fonction des données mises en antémémoire qui ont été lues ;
à l'étape d'évaluation de ce que les données mises en antémémoire qui ont été lues sont ou non les mêmes que les données mises en antémémoire à écrire avant le stockage, le fait que les données mises en antémémoire qui ont été lues sont ou non les mêmes que les données mises en antémémoire à écrire avant le stockage est évalué par évaluation de ce que les premières données de contrôle sont ou non les mêmes que les secondes données de contrôle.

13. Procédé selon la revendication 9, comprenant en outre l'étape suivante :
stocker un état normal ou anormal de l'espace mémoire destiné au stockage des données mises en antémémoire ;
dans lequel, l'état de l'espace mémoire dans la mémoire est enregistré par tenue à jour d'une table de mappage de mémoire, les éléments de composition de table de mappage de mémoire correspondent à des segments d'espaces mémoire de la mémoire, un à un, et chacun des éléments de composition représente un état de segment d'espace mémoire correspondant ; l'état évalué du segment d'espace mémoire est écrit dans la table de mappage de mémoire.

14. Procédé selon la revendication 13, dans lequel :
l'espace occupé par l'élément de composition de la table de mappage de mémoire est d'un bit, et la capacité du segment d'espace mémoire correspondant à chaque élément de composition de la table de mappage de mémoire est la même.
